(19) Europäisches Patentamt
European Patent Office
Office européen des brevets

(11) **EP 4 292 185 B1**

(12) **EUROPEAN PATENT SPECIFICATION**

(45) Date of publication and mention
of the grant of the patent:
**22.10.2025 Bulletin 2025/43**

(21) Application number: **22710309.0**

(22) Date of filing: **15.02.2022**

(51) International Patent Classification (IPC):
*H02J 3/16* (2006.01)    *H02J 3/18* (2006.01)
*H02J 3/38* (2006.01)    *H02J 3/30* (2006.01)
*F03D 7/02* (2006.01)    *F03D 7/04* (2006.01)
*F03D 9/25* (2016.01)

(52) Cooperative Patent Classification (CPC):
**H02J 3/16; H02J 3/1885; H02J 3/381;**
F03D 7/0284; F03D 7/048; F03D 9/257; H02J 3/30;
H02J 2300/28

(86) International application number:
**PCT/EP2022/053615**

(87) International publication number:
**WO 2022/171890 (18.08.2022 Gazette 2022/33)**

(54) **WIND TURBINE FARM AND METHOD FOR OPERATING**

WINDTURBINENPARK UND VERFAHREN ZUM BETRIEB

PARC ÉOLIEN ET PROCÉDÉ DE FONCTIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.02.2021 EP 21157197
15.02.2021 EP 21157194**

(43) Date of publication of application:
**20.12.2023 Bulletin 2023/51**

(73) Proprietor: **Siemens Gamesa Renewable Energy
A/S
7330 Brande (DK)**

(72) Inventors:
• **NICKELSEN, Peder Riis**
**7480 Vildbjerg (DK)**
• **STIESDAL, Henrik**
**5000 Odense C (DK)**
• **THISTED, Jan**
**8830 Tjele (DK)**

(74) Representative: **SGRE-Association
Siemens Energy Global GmbH & Co. KG
SE I IM P Intellectual Property
Siemenspromenade 9
91058 Erlangen (DE)**

(56) References cited:
**EP-A1- 2 439 830    EP-A1- 3 080 888
EP-A1- 3 723 229**

**Description**

Field of invention

The present invention relates to wind turbine farms and methods, more precisely to wind turbine farms and methods to operate during grid faults.

Background of the invention

Wind turbine generators have for long been connected to electrical systems or the grid adhering to standards and codes imposed by the requirement of the electrical system or the grid operator.

Likewise, a plurality of wind turbine generators may be aggregated or connected in wind turbine farms. A wind turbine farm is also referred to as a wind farm or a wind park. Such connection of a wind turbine generator to an electrical system or grid is also faced with requirements or standards.

The document EP 3 080 888 A1 discloses a method for controlling a reactive current injection in a wind power plant during a grid fault. The method comprises measuring an amount of reactive current to be provided, determining the difference between the amount to be injected and the current contribution and generating addition reactive power based on such difference.

There is a need to generally improve utilisation of wind turbine generators and farms and to improve their interaction with the grid.

In particular, there is a long felt need to improve or provide alternative methods and systems to enable and/or facilitate the wind farms to meet the grid operator requirements during grid fault events such as voltage dips, voltage drops, etc.

Summary of the invention

In first aspect, a method of operating a wind turbine farm is provided. The wind farm comprises a plurality of wind turbines and a synchronous condenser. Each of the plurality of wind turbines are connected to a common connection point by a wind turbine circuit breaker. The circuit breakers are configured to connect/disconnect their respective wind turbine from the common connection point. The synchronous condenser is connected to the common connection point via a synchronous condenser circuit breaker. The synchronous condenser circuit breaker is configured to connect/disconnect the synchronous condenser from the grid. The common connection point being coupled to the grid.

Firstly, the synchronous condenser and the plurality of wind turbines are connected to the common connection point by closing the synchronous condenser circuit breaker and respective wind turbine circuit breakers, respectively. The grid voltage is measured at the common connection point, and the measured grid voltage compared with a predetermined normal operation voltage range. If the measured grid voltage is out of, e.g. below, the predetermined normal operation voltage range the plurality of wind turbines are disconnected from the common connection point by opening each wind turbine circuit breaker. The synchronous condenser is (upon determining that the measured grid voltage is out of the predetermined normal operation voltage range) maintained connected to the common connection point by keeping the synchronous condenser circuit breaker closed. The plurality of wind turbines are reconnected to the common connection point, by closing the respective wind turbine circuit breaker of each of the plurality of wind turbines, at a predefined reconnection time (t_rec).

Having the synchronous condenser connected to the common connection point, and thus to the grid, during a grid fault enables injecting power, i.e. reactive and/or active, to the grid. The active power from the synchronous condenser may provide frequency support while the reactive power provides voltage support. Thus, the wind turbine farm is able to meet the grid code requirements regarding frequency and voltage support.

In addition, by having the plurality of wind turbines disconnected from the grid for a transient period of time during a grid fault and the synchronous condenser connected to the grid during a grid fault, provides robust operation of the grid during e.g. voltage events such as low voltage and "zero voltage" events, as the wind turbine farm may continue injecting or providing power to the grid.

Moreover, by maintaining the synchronous condenser connected to the grid upon detecting a grid fault greatly simplifies the aggregated wind turbine farm response thereby enabling fulfilling the grid operator requirements and also providing stability to the grid. The inertia from the synchronous condenser may be used to stabilise frequency. The frequency support depends on the inertia constant H, which may be defined for the synchronous condenser as:

$$H = [MWs] / [MVA] = \frac{1}{2} J\omega^2/MVA;$$

wherein J is the moment of inertia, $\omega$ is the angular speed and MVA is the apparent power of the synchronous condenser.

Therefore, the voltage events can be mitigated for periods over e.g. 100 milliseconds. The synchronous condenser may comprise an automatic voltage regulator (AVR). The AVR may provide support to ride through events as the synchronous condenser also provides reactive power support to the grid.

Synchronous condenser may be selected in the range of 25 - 1300 MVA. In an example a single (large) synchronous condenser may be used. In another example, a synchronous condenser system comprising a plurality of synchronous condensers e.g. a plurality of smaller synchronous condenser (when compared to the examples comprising a single synchronous condenser) may be used. Such synchronous condenser system may comprise the plurality of synchronous condensers arranged in parallel.

In addition, by disconnecting the plurality of wind turbines a sudden shut down or drastic slowdown of the turbines may be avoided. Therefore, mechanical loads and stress may be prevented or at least substantially reduced in the wind turbines. As a result, the lifetime is not shortened due to mechanical stress.

Moreover, by reconnecting the plurality of turbines (closing their respective circuit breaker) at a predefined reconnection time, in the event of a successful recovery of the grid, the plurality of wind turbines may be ready to inject or supply power to the grid, enabling a fast recovery of normal operation after a grid fault.

In an example, the method may further comprise measuring a verifying/confirmation voltage of the grid at the common connection point at a predetermined recovery time and comparing the measured verifying voltage with a predetermined recovery voltage range.

In an example, the method may further comprise disconnecting the synchronous condenser from the grid by opening the synchronous condenser circuit breaker, if the measured verifying voltage of the grid is below the predetermined recovery voltage range of the grid. Short-circuits or any other undesired electric events are thus prevented in the wind turbine farm.

In an example, the method may further comprise maintaining the synchronous condenser connected to the grid by keeping closed the synchronous condenser circuit breaker, if the measured verifying voltage of the grid is within the predetermined recovery voltage range of the grid.

In an example, reconnecting the plurality of wind turbines may comprise iteratively reconnecting the plurality of wind turbines to avoid a simultaneous reconnection of the plurality of turbines. The mechanical stress on the wind turbines may thus be substantially reduced which prevents a premature failure and/or a shortening of the lifetime of the wind turbines. In addition, a smoother grid connection transition is enabled.

In an example, reconnecting the plurality of wind turbines may comprise iteratively reconnecting the plurality of wind turbines in a predetermined reconnection sequence or order, thus substantially reducing the mechanical stress on the wind turbines.

In an example, the reconnection sequence or order depends on the wind turbine terminal voltage or on the rotational speed of the rotor of each wind turbine of the plurality of wind turbines.

In an example, disconnecting the plurality of wind turbines from the common connection point may comprise iteratively disconnecting the plurality of wind turbines by iteratively opening the respective wind turbine circuit breaker of each of the plurality of wind turbines. The disconnection process may therefore be reliable and safe.

In a further aspect a wind turbine farm for operating during grid faults is provided. The wind turbine farm comprises a plurality of wind turbines, a plurality of wind turbine circuit breakers, a synchronous condenser, a synchronous condenser circuit breaker and a central controller configured to implement the method according to any of the disclosed examples. The plurality of wind turbines are connected to a common connection point, the common connection point being coupled to the grid. The plurality of wind turbine circuit breakers are configured to selectively connect/disconnect the plurality of wind turbines from the common connection point, wherein each circuit breaker comprises an end coupled to a wind turbine of the plurality of wind turbines and an the other end connected to the common connection point. The synchronous condenser is connected to the common connection point and is configured to provide an amount of apparent power to the grid. The synchronous condenser circuit breaker is configured to selectively connect/disconnect the synchronous condenser from the common connection point. The synchronous condenser circuit breaker comprises an end coupled to the synchronous condenser and the other end connected to the common connection point.

By using wind turbine circuit breakers, a sudden shut down of the wind turbines may be prevented in case of a grid fault, that is, there may be no need drastically slow down the wind turbines. Thus, loads and/or stress in the wind turbines which leading to a shortening of lifetime of the turbines, may be avoided.

In addition, by having a synchronous condenser in the wind farm, it helps the plurality of wind turbines to supply power to the grid during normal operation, and moreover, it is possible to continue injecting power to the grid during a grid fault which provides a robust operation during the grid fault. Additionally, the wind farm is enabled to comply the grid code requirements.

Moreover, the synchronous condenser enables strengthening the grid thereby providing a more stable operation from the plurality of wind turbines point of view i.e. they perceive a stronger grid at their terminals.

Furthermore, the use of a synchronous condenser may enable reducing manufacturing costs of the plurality wind turbines. As the wind turbines are not required to provide all the reactive power to the grid they do not need to be dimensioned to do so. Therefore, the size of the cables, the inverter and/or the converter (among other elements) of the wind turbines may not need to be oversized which enables a cost saving.

The synchronous condenser may be configured to supply power within a certain range according to the power rating. Likewise, each wind turbine has a power rating and the plurality of wind turbines together have an aggregate power rating.

In addition, by having a synchronous condenser circuit breaker, the synchronous condenser may, in case of unsuccessful grid recovery, be disconnected from the grid to avoid undesired electric events such as short-circuits that may damage the wind turbine farm.

The wind farm may thus have a robust operation both during normal operation and during a grid fault which renders the operation of the wind farm safe and reliable in despite of the ongoing grid conditions.

In an example, the synchronous condenser may be configured to provide an apparent power rating of less than half of the aggregate apparent power rating of the plurality of wind turbines. During a short period of time the synchronous condenser has current overload capability that helps to fulfil the grid operator requirements, therefore the power generated by the entire wind farm is not required to do so.

In an example, the synchronous condenser may be configured to provide an apparent power rating of less than one-quarter of the aggregate power rating of the wind turbines.

In an example, the synchronous condenser may comprise a flywheel. The flywheel further enables providing support to the grid with a frequency inertia response and a voltage support during an event, e.g. a voltage drop, and during a recovery period. The flywheel may provide further inertia response by the kinetic energy stored in the rotating mass of the rotor of the synchronous condenser. Adding a mass to the rotor may further enhance the grid support by providing more inertia to the power grid, which may also be beneficial during grid faults as the flywheel may support the recovery of the grid after e.g. a voltage drop.

In a further aspect, computer program product is provided. The computer program product comprises instructions to cause the wind turbine farm according to any of the disclosed examples to implement the method according to any of the disclosed examples.

Brief Description of Drawings

Embodiments of the invention will be described in the figures, whereon:

Figure 1          schematically illustrates a wind turbine according to an example;

Figure 2          schematically illustrates a wind farm according to an example;

Figures 3A and 3B    schematically illustrates the wind farm of Figure 2 in different operational stages, according to an example;

Figures 4A - 4C    illustrate the behaviour of reactive power and power factor of different circuits, according to an example;

Figure 5          illustrates power diagrams at different locations of a wind turbine farm and grid, according to an example;

Figures 6A - 6C    illustrate the total reactive power to be exchanged with the grid according to examples;

Figure 7          schematically illustrates a flow chart of a method for operating a wind turbine farm according to an example;

Figure 8          schematically illustrates a flow chart of a method for operating a wind turbine farm according to an example; and

Figure 9          schematically illustrates the change of the grid voltage after a grid event, according to examples; and

Figure 10         illustrates a flow diagram of a method to operate a wind turbine farm according to an example.

Detailed description

The term "normal operation of a wind turbine or a wind turbine farm" shall be understood as the routine running in absence of grid events or grid faults e.g. voltage drop.

The term "grid fault" shall be understood as an event or disturbance which perturbs or alters the normal performance of the grid e.g. voltage and/or frequency deviations outside a normal operating range. Some grid fault events may be voltage dip, voltage drop, Zero Voltage Ride Through (ZVRT), Low Voltage Ride Through (LVRT), etc.

The term "apparent power rating of the synchronous condenser" shall be understood as the sum of a geometric vector addition of the active and reactive power the device is able to generate and/or provide to the grid.

The term "aggregate power rating of the plurality of wind turbines" shall be understood as the sum of the power generated by all the wind turbines, i.e. the addition of the contribution of each of the wind turbines.

The term "voltage at terminals or terminal voltage" shall be understood as the voltage measured at either the low voltage terminals or the high voltage terminals of a wind turbine.

The term "total reactive power" shall be understood as the amount of reactive power necessary to be exchanged with the grid in order to neutralize the grid or to comply with the requirements set by the grid operator.

The term "total reactive power value" shall be understood as the amount of reactive power calculated internally by the wind farm before being exchanged, it may comprise the flow direction, amount and the percentage to be exchanged by the synchronous condenser and the plurality of wind turbines.

The term "(to) neutralize the grid" shall be understood as compensating or counter-balancing the grid for reducing or removing the excess or insufficiency of a grid parameter.

The term "aggregate WT-reactive power" shall be understood as the reactive power of the plurality of wind turbines exchanged with the grid, the contribution all of the wind turbines of the plurality of wind turbines.

The term "SC-reactive power" shall be understood as the reactive power of the synchronous condenser exchanged with the grid.

The term "(to) export reactive power" shall be understood as extracting reactive power from the grid by the wind turbine farm.

The term "(to) import reactive power" shall be understood as injecting reactive power from the wind farm to the grid.

The term "the percentage of SC-reactive power" may be the percentage of total reactive power to be exchanged by the wind farm which is exchanged by the synchronous condenser.

The term "the percentage of WT-reactive power" may be the percentage of total reactive power to be exchanged by the wind farm which is exchanged by the plurality of wind turbines.

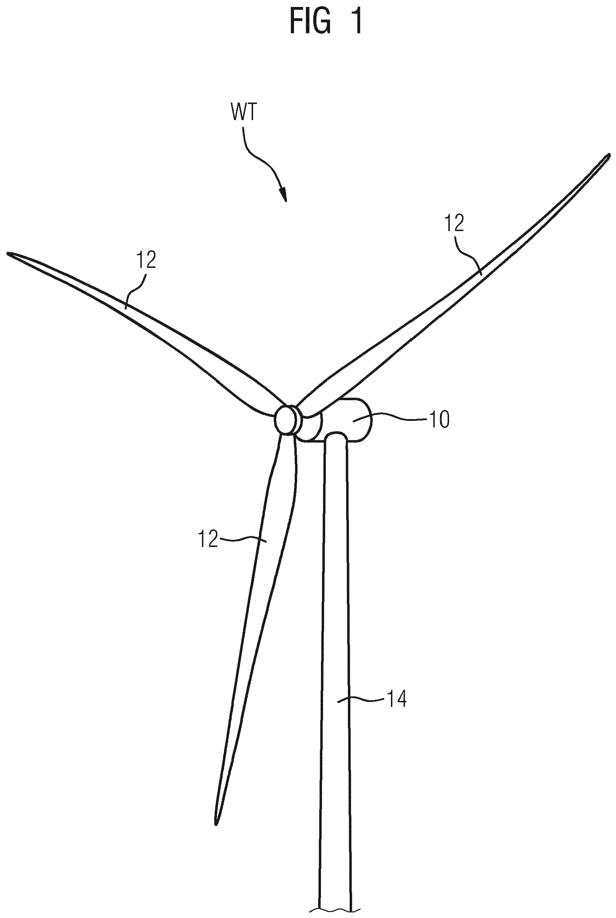

Figure 1 illustrates an exemplary wind turbine WT according to an example.

The wind turbine WT of Figure 1 may comprise a nacelle 10 housing a power generator (not shown). The nacelle 10 may be mounted on a tower 14. Figure 1 discloses a portion of the tower 14. The tower 14 may have any height that facilitates the operation of a wind turbine WT according to any of the examples herein disclosed, and may depend e.g. on the specific site requirements.

The wind turbine WT may also comprise a rotor hub connected to a plurality, e.g. three, blades 12 extending radially outwardly from the hub for converting the wind energy into rotational energy. The wind turbine WT may have any other number of blades 12 that facilitates operation of the wind turbine WT. The blades may have any length and/or shape.

The power generator may be coupled to a power converter (not shown), or to a power converter system, that may convert a substantially Direct Current (DC) power output from the power generator to Alternating Current (AC) power. The AC power may be transmitted or injected into an electrical distribution network, i.e. a grid.

In examples comprising a power converter system, the power system may comprise solar panels coupled to form one or more solar arrays. In an example, the power system may comprise s a plurality of solar panels and/or solar arrays coupled together in a series and/or parallel to facilitate generating a desired current and/or voltage output. Each solar panel may comprise one or more photovoltaic panel(s), a solar thermal collector or any other device that converts solar energy to electrical energy e.g. substantially direct current. The solar panel(s) may be coupled to the power converter.

The power converter may be configured to adjust the amplitude of the voltage and/or current of the converted AC power to an amplitude suitable for the grid. The power converter may be configured to provide AC power at a frequency and a phase that are substantially equal to the grid frequency and phase.

In an example, the power converter may provide three phase AC power. However, the power converter may provide single phase AC power or any other number of phases of AC power.

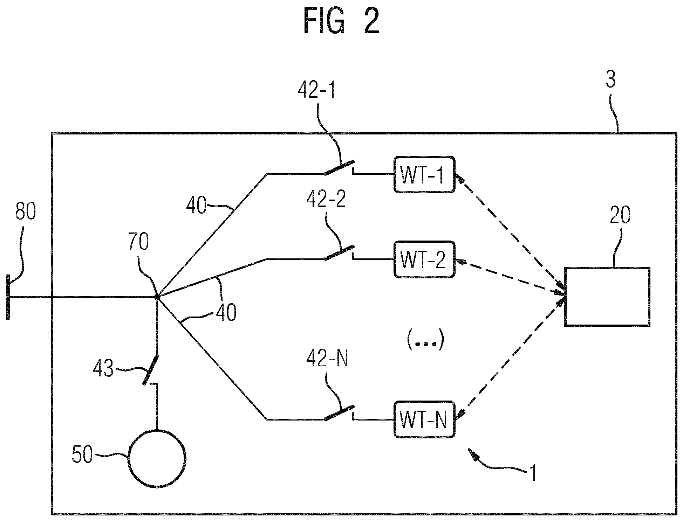

The wind turbine WT according to any of the disclosed examples may be configured to operate in a wind turbine farm 30 (see Figure 2).

Figure 2 shows an example of a wind farm 30 configured to operate during grid faults.

The wind farm 30 may comprise a plurality of wind turbines 1 according to any of the disclosed examples. Herein, WT is used together with a numeral 1, 2, ..., N indicating that a wind turbine farm may comprise a plurality, i.e. N, wind turbines WT. Each of the plurality of wind turbines WT-1, ..., WT-N may be connected to a common connection point 70.

The common connection point 70 may be coupled to the grid 80. The wind turbine farm 30 may also comprise a plurality of wind turbine circuit breakers 42-1, ..., 42-N for connecting the plurality of wind turbines to the common coupling point 70. Each of the plurality of wind turbines WT-1, ..., WT-N may be indirectly connected to the common connection point 70, and thus to the grid 80, by a (respective) wind turbine circuit breaker 42-1, ..., 42-N. Each wind turbine circuit breakers 42-1, ..., 42-N may be arranged within or be part of a respective wind turbine.

The number of wind turbine circuit breakers 42-1, ..., 42-N may be equal to the number of wind turbines WT-1, ..., WT-N.

Each wind turbine circuit breaker 42-1, ..., 42-N may have an end coupled to a wind turbine and the other end coupled to the common coupling point 70. The wind turbine circuit breakers 42-1, ..., 42-N may be configured to be selectively opened/closed and therefore, to disconnect/connect the wind turbines from the grid 80. Upon closing such wind turbine circuit breaker, the wind turbine may be connected to the grid. In addition, upon opening a wind turbine circuit breaker, the respective wind turbine may be disconnected from the grid e.g. in the event a grid fault is detected.

The circuit breakers may be commercially available circuit breaker e.g. an electromechanical circuit breaker.

In some examples, the wind farm 30 may be configured to exchange reactive power with the grid. In such examples, the plurality of wind turbines may be configured to exchange aggregate WT-reactive power with the grid. That is, the plurality of wind turbines may, depending on the on-going grid condition, import or export an amount of reactive power in order to compensate the grid. In an example, the plurality of wind turbines may be configured to exchange an amount of apparent power, i.e. the vectorial sum of active and reactive power, to the grid.

The WT-reactive power may depend on the configuration of the wind turbines. The wind turbines may be dimensioned for exchanging a certain reactive power with the grid. The higher the amount of reactive power to be exchange the higher the over dimension of certain elements of the wind turbines is.

For example, if the reactive power demand required by the aggregate wind turbines, i.e. the reactive power to be exchanged by the plurality of wind turbines, is 50% of the rated active power then, the apparent current from the aggregate wind turbines and from each of the wind turbines may increase as the vectorial sum of the active and reactive current, i.e. a factor of 1.12. This means that certain wind turbines and/or wind farm components, e.g. the wind turbine frequency converter, the wind turbine transformer and/or the wind farm array cable system; need to be dimensioned for 12% higher current.

By having a synchronous condenser which may be configured to provide a percentage of the required reactive power, the plurality of wind turbines are not required to be dimensioned for exchanging huge amount of reactive power. That is, e.g. the size of the inverter (or of the converter), of the transformer, etc.; of the wind turbines may not need to be oversized or not need to be that much oversized if compared with examples lacking a synchronous condenser. Manufacturing and/or maintenance costs of the wind farm may therefore be substantially reduced.

The wind turbine farm 30 may further comprise a synchronous condenser 50. The synchronous condenser 50 may be (indirectly) connected to the common connection point 70, and thus to the grid 80.

A synchronous condenser is a device that comprises a shaft that spins freely, i.e. a spinning machine comprising a certain inherent inertia. The synchronous condenser 50 may be configured to provide an amount of apparent power i.e. the vectorial sum of active and reactive power, to the grid. The kinetic energy stored in the rotating mass of the rotor provides or absorbs active power during frequency deviations on the grid. The active power depends on the rate of change of frequency and on the inertia constant H of the SC rotor. The synchronous condenser may also be configured to mainly provide reactive power when a grid fault occurs.

The synchronous condenser 50 may be configured to provide an apparent power rating of less than half of the aggregate power rating of the plurality of wind turbines 1 during normal operation. In an example, the synchronous condenser 50 may be configured to provide (during normal operation) an apparent power rating of less than one-quarter of the aggregate power rating of the plurality of wind turbines 1.

The synchronous condenser 50 may comprise a local controller (not shown) configured to measure the grid voltage at a common connection point 70 by using a voltage transformer and a sensor e.g. a voltage transducer. The local controller may also be configured to open-/close a synchronous condenser circuit breaker (see below).

The synchronous condenser 50 may enable zero-voltage ride through and low-voltage ride through of the wind turbine farm 30 as it may provide voltage support and frequency support.

In some examples, the synchronous condenser 50 may be configured to exchange SC-reactive power with the grid. That is, the synchronous condenser 50 may, depending on the on-going grid condition, import or export an amount of reactive power in or-der to compensate the grid.

The kinetic energy stored in the rotating mass of the rotor provides or absorbs active power during frequency deviations on the grid. The active power depends on the rate of change of frequency and on the inertia constant H of the SC rotor. The synchronous condenser may also be configured to mainly provide reactive power when a grid fault occurs.

The synchronous condenser 50 may have a predetermined reactive power exchange capability which may depend e.g. on the active power rating of the wind farm. In an example, the synchronous condenser 50 may have predetermined reactive power exchange capability of about 33% of the active power rating of the wind farm.

In an example, the synchronous condenser 50 may comprise an extra mass, e.g. a flywheel, to its rotating shaft. A flywheel is a mechanical device that adds moment of inertia, $J$ [kgm$^2$] to the synchronous condenser rotor. During operation with flywheel. additional rotational energy is stored in the synchronous condenser rotor for enhanced frequency support.

The flywheel may be arranged in the synchronous condenser shaft wherein it may freely revolve. The flywheel may be made of e.g. metal, composite- or fibre material. In an example, the flywheel may be configured to rotate at the revolution rate of the synchronous speed when directly connected to the shaft, or at a higher revolution speed if the synchronous condenser comprises a gearbox between the shaft and the flywheel.

In an example, the synchronous condenser 50 may be a synchronous condenser system (not shown). The synchronous condenser system may comprise a plurality of synchronous condensers arranged in parallel.

The synchronous condenser 50 may comprise synchronizing device (not shown) having a with a motor to speed up the synchronous condenser. Additionally, the synchronous condenser 50 may comprise a measuring device (not shown) for measuring the grid phase and the synchronous condenser phase. In an example, the local control of the synchronous condenser may compare the grid phase and the synchronous condenser phase, and when both phases are identical, the synchronous condenser circuit breaker may be closed.

The wind farm 30 may further comprise a synchronous condenser circuit breaker 43. The synchronous condenser circuit breaker 43 may be configured to selectively open/close thereby disconnecting/connecting the synchronous condenser 50 from the grid 80. The synchronous condenser circuit breaker 43 may be arranged within or be part of the synchronous condenser.

That is, upon closing the synchronous condenser circuit breaker 43, the synchronous condenser 50 may be connected to the grid. Besides, when opening the synchronous condenser circuit breaker 43, the synchronous condenser 50 may be disconnected from the grid e.g. if after a grid fault the grid voltage is not recovered.

The synchronous condenser circuit breaker 43 may be a commercially available circuit breaker e.g. an electromechanical breaker.

The wind farm 30 may comprise an internal cabling system 40 connecting the plurality of wind turbines 1 to the grid 80 through the common connection point 70. Although a single cable is shown, both the wind farm and the grid may be configured to operate at any number of AC power phases. In an example, the wind farm and the grid are three phase systems. In another example, the wind farm and the grid are single phase systems.

The wind farm 30 may further comprise a central controller 20. The central controller may be connected (see the doted lines) to each of the plurality of wind turbines 1 with wired or wireless connection. The central controller may also be connected to the synchronous condenser 50 wired or wirelessly. The central controller 20 may be configured to manage the operation of the wind farm 3 by sending control signals to each of the plurality of wind turbines 1. Additionally, the central controller 20 may be configured to manage the operation of the wind turbine circuit breakers 42-1, ..., 42-N and of the synchronous condenser circuit breaker 43. The central controller may send instructions, e.g. signals, to each circuit breaker, i.e. to the wind turbine circuit breakers 42-1, ..., 42-N and of the synchronous condenser circuit breaker 43, to selectively open/close them.

In an example, the central controller 20 may be a computerized controller. The central controller 20 may comprise a memory unit (not shown) for storing predetermined ranges, values, look-up tables, etc.

The wind farm 30 may also comprise a measuring device (not shown) configured to measure parameters e.g. at the common connection point (70). The measuring device may be connected to the central controller. The measuring device may be configured to measure either wind farm parameter or grid parameter. The measuring device may be configured to measure voltage, current, active power, reactive power, frequency, etc.

The wind turbine farm 30 may be an offshore or an onshore wind farm.

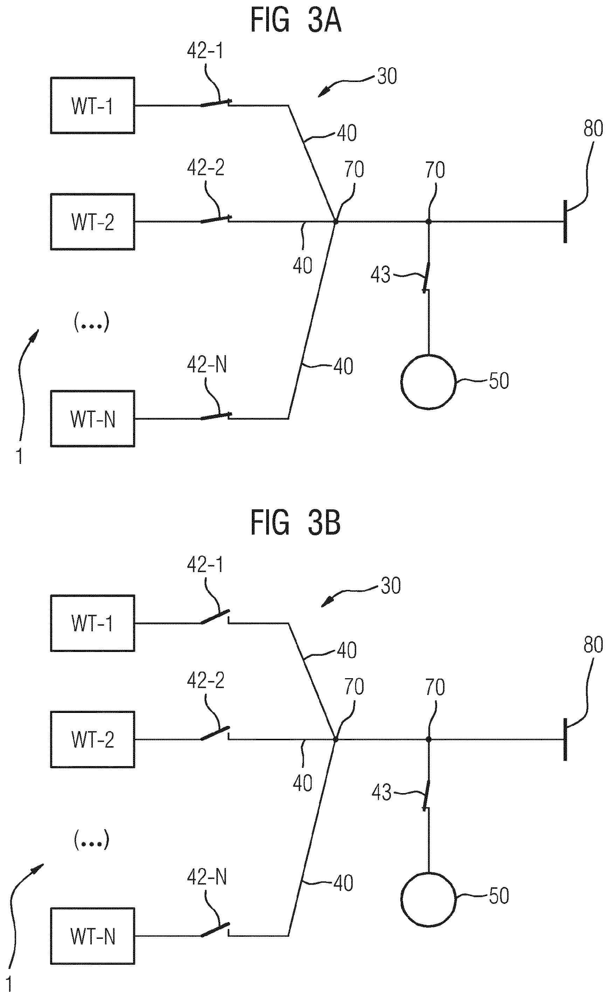

Figures 3A and 3B show different configurations of the wind farm of Figure 2 at different operation stages.

Figure 3A depicts the wind farm 30 of Figure 2 during normal operation, i.e. in the absences of a grid event. During normal operation the wind turbine circuit breakers 42-1, ..., 42-N may be closed thereby connecting the plurality of wind turbines 1 to the grid 80. The power generated by each wind turbine WT-1, ..., WT-N may therefore be injected to the grid 80. The total power injected to the grid will be the aggregated power i.e. the sum or contribution of each of the plurality of wind turbines.

In addition, during normal operation the synchronous condenser circuit breaker 43 may also be closed, thereby connecting the synchronous condenser 50 to the grid which adds grid support.

Figure 3B depicts the wind farm 30 of Figure 2 upon detection of a grid fault.

The detection of a grid fault may be carried out by measuring the voltage of the grid at the common connection point 70, e.g. by a sensor, and comparing, e.g. at the central controller, the measured grid voltage with a predetermined normal operation voltage range. If the measured grid voltage is out of the predetermined normal operation voltage range e.g. below, the central controller may determine that a grid fault occurred.

After determining the grid fault, the wind turbine circuit breakers 42-1, ..., 42-N may be opened e.g. following instructions from the central controller, thereby disconnecting the plurality of wind turbines from the grid. A sudden shut down of the wind turbines may therefore be avoided which prevents loads and stress in the components of the wind turbines. That is, the wind turbines may continue operating without a drastic operation change.

The plurality of wind turbines may be reconnected to the grid at a reconnection time e.g. 1 seconds after determining a grid fault. The reconnection may be simultaneous or iterative.

As shown in Figure 3B, upon detection of a grid fault the synchronous condenser 50 may be maintained coupled to the grid, i.e. the synchronous condenser circuit breaker 43 may remain closed. The synchronous condenser 50 may thus provide inertia to the grid which may support recovery of the grid i.e. the recovery of nominal voltage.

If the grid is able to recovery, i.e. to successfully overcome the grid fault, the synchronous condenser 50 may remain connected, otherwise, the synchronous condenser circuit breaker 43 may be opened thereby disconnecting the synchronous condenser 50 from the grid.

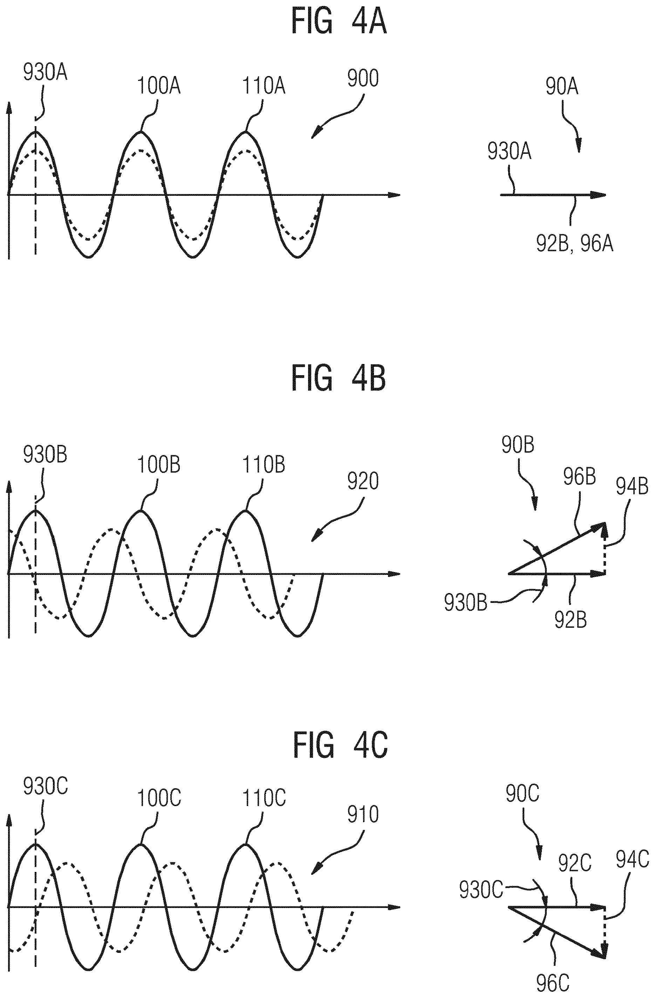

Figures 4A - 4C illustrate the reactive power 94A - 94C and the power factor of different exemplary circuits. The power factor is the ratio of the real power absorbed by the load to the apparent power flowing in the circuit.

Figure 4A depicts a simplified graph of an exemplary a resistive circuit 900 wherein a current 110A is in phase with a voltage 100A, thus the phase angle difference 930A is zero.

Figure 4A also shows a power vector diagram (on the right) which discloses the power 90A of the circuit. Since the phase angle difference 930A is zero, the active power 92A and the apparent power 96A are identical. Thus, the reactive power is zero. The power factor of the circuit is therefore 1. The resistive circuit 900 does not comprise an excess of voltage and/or of reactive power, and thus, it may be considered to be compensated.

Figure 4B depicts a simplified graph of an exemplary capacitive circuit 920 wherein a current phase 110B is lagging a voltage phase 100B. Thus, there is phase angle difference 930B between current 110B and voltage 100B.

Figure 4B also depicts a power vector diagram (on the right) disclosing the power 90B of the circuit. The power 90B comprises an apparent power 96B which is $V \cdot I$, an active power 92B being $V \cdot I \cdot \cos(\Theta)$ and an reactive power 94B is $V \cdot I \cdot \sin(\Theta)$, wherein $\Theta$ is the phase angle difference 930B. Therefore, the power factor of the circuit is $\cos(\Theta)$.

The capacitive circuit 920 comprises an excess of voltage and/or of reactive power, therefore it may be considered to be unbalanced. In order to compensate a capacitive circuit, the voltage may be decreased and/or reactive power imported by a compensating unit (not shown) in an amount having the same value but opposite sign of the circuits reactive power 94B to achieve the behaviour of a resistive circuit.

Figure 4C depicts a simplified graph of an exemplary an inductive circuit 910 wherein a current phase 110C is leading a voltage phase 100C, thus there is a phase angle difference 930C between current 110C and voltage 100C.

Figure 4C also shows a power vector diagram (on the right) which discloses the power 90C of the circuit. The power 90C comprises an apparent power 96C which is $V \cdot I$, an active power 92C being $V \cdot I \cdot \cos(\Theta)$ and an reactive power 94C being $V \cdot I \cdot \sin(\Theta)$, wherein $\Theta$ is the phase angle difference 930C. Thus, the power factor of the circuit is $\cos(\Theta)$. The inductive circuit 910 therefore comprises an insufficient voltage and/or reactive power, and thus, it may be considered to be unbalanced. In order to compensate an inductive circuit, the voltage should be increased and/or reactive power may be exported by a compensating unit (not shown) in an amount having the same value but opposite sign of the circuits reactive power 94C i.e. until the circuit behaves as a resistive circuit.

Herein, the compensating unit may be the wind farm. The wind farm may adapt or the reactive power exchange in order to compensate the grid, i.e. to achieve that the grid behaves as a resistive circuit.

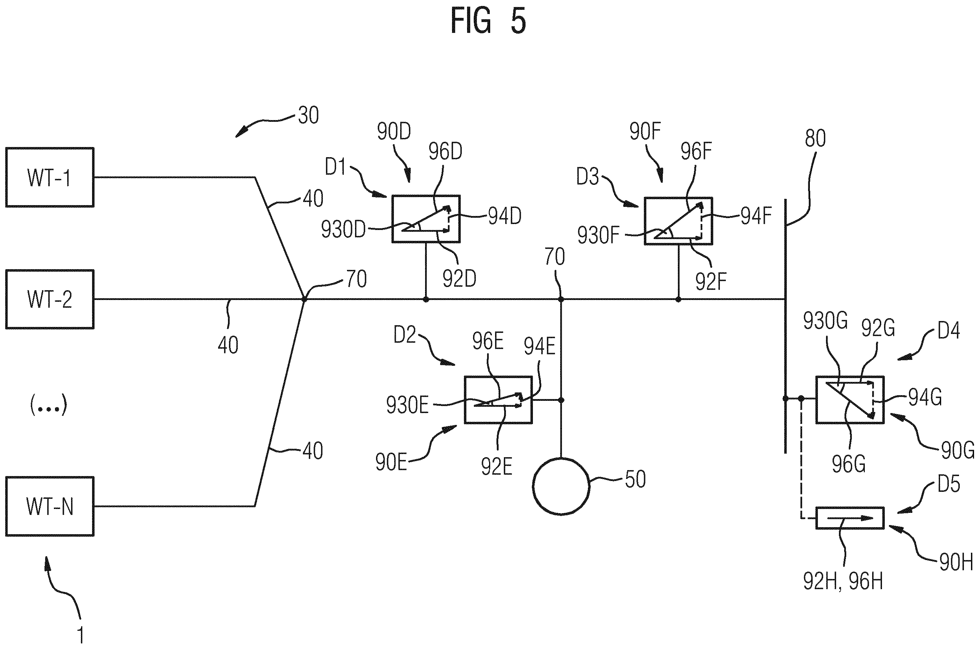

Figure 5 illustrates operational aspects of reactive power 94 at different locations of a wind farm 30 according to any of the disclosed examples, and also at the grid 80. For simplicity, the reactive power 94 is disclosed for a single phase from the wind turbines 1 to the grid 80.

Figure 5 shows power vector diagrams D1 - D3 at different points of the wind turbine farm and power vector diagrams D4 and D5 of the grid, according to an example.

The power vector diagram D1 is the power vector of the plurality of wind turbines 1. The power vector diagram D1 may be measured at any point between the plurality of wind turbines 1 and the common connection point 70. The power vector diagram illustrates the power 90D of the plurality of wind turbines being an apparent power 96D comprising a positive active power 92D and a positive reactive power 94D (see the doted arrow) having a phase angle 930D. The reactive power 94D may be denoted aggregate WT-reactive power.

As shown by the power vector diagram D1, that the plurality of wind turbines 1 in the example of Figure 5, may have a behaviour similar to a capacitive circuit (see Figure 4B).

The power vector diagram D2 is the power vector of the synchronous condenser 50. The power vector D2 may be measured at any point between the synchronous condenser 50 and the common connection point 70.

The power vector diagram illustrates the power 90E of the synchronous condenser 50 being an apparent power 96E comprising a positive active power 92E and a positive reactive power 94E (see the doted arrow) having a phase angle 930E. The reactive power 94E may also denoted SC-reactive power 54.

The power vector diagram D2 shows that the synchronous condenser 50 may behave as a capacitive circuit (see Figure 3B).

Figure 5 also depicts an accumulated power vector diagram D3. The accumulated power vector diagram comprises the contribution of the plurality of wind turbines 1 and also of the synchronous condenser 50.

The power vector diagram illustrates the aggregated power of the wind farm and the SC 90F being an aggregated apparent power 96F comprising a positive aggregated active power 92F and a positive aggregated reactive power 94F (see the doted arrow) having a phase angle 930F.

Power vector diagram D4 is the power vector diagram of the grid 80. The power vector diagram D4 may be measured at any point between the grid and the common connection point 70 e.g. usually this information may be given by the grid operator. The power vector diagram D4 illustrates the power 90G of the grid being an apparent power 96G comprising a positive active power 92G and a negative reactive power 94G (see the doted arrow) having a phase angle 930G.

The power vector diagram D4 shows that the grid 80 behaves as an inductive circuit (see Figure 3C), e.g. as a consequence of a voltage decrease. In the example of Figure 5, the grid is unbalanced due to a voltage decrease and/or an insufficient reactive power.

Thus, and in order to compensate the grid, the voltage is to be increased and/or reactive power be exported to the grid.

In the example, the accumulated power vector diagram D3 has an accumulated reactive power 94F with same value but opposite sign of the reactive power 94G of the grid 80, therefore when the accumulated power is exported to the grid, the grid may be compensated.

After exporting the accumulated power into the grid, the grid may be compensated i.e. it may behave as or very similar to a resistive circuit (see Figure 3A) as shown by power vector diagram D5 (in dotted lines). The exported accumulated capacitive power may increase the grid voltage thereby counter balancing it.

In an alternative example (not shown), if the grid behaves as a capacitive circuit i.e. its voltage needs to be decreased in order to compensate the grid, reactive power needs to be imported to the wind turbine farm. The plurality of wind turbines and the synchronous condenser may thus behave as inductive circuits.

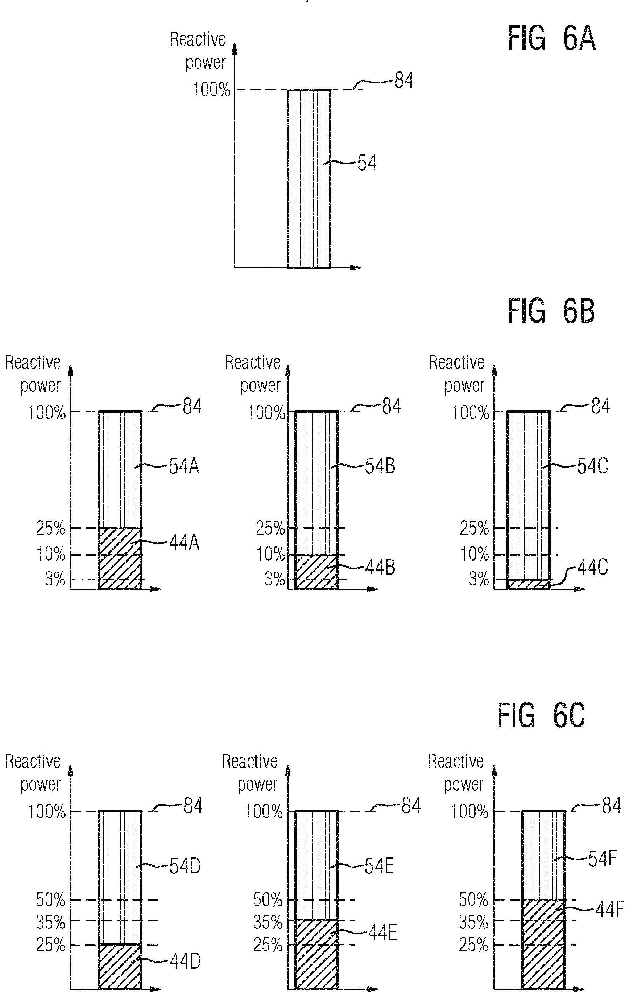

Figures 6A - 6C illustrate different configurations of the reactive power exchanged by a wind turbine farm according to any of the disclosed examples, wherein the total reactive power 84 to be exchanged comprises a percentage of SC-reactive power 54, 54A - 54F and a percentage of WT-reactive power 44, 44A - 44F.

The percentage of reactive power to be exchanged by each reactive power source i.e. the synchronous condenser 50 and the plurality of wind turbines 1, may vary according to: the total reactive power to be exchanged, i.e. the required amount to compensate the grid, and the predetermined capacity of the synchronous condenser. The percentage of SC-reactive power may be as high as possible e.g. depending on the predetermined reactive power capability of the synchronous condenser, and the remaining percentage up to the total reactive power, may therefore be WT-reactive power.

In other words, in the event the reactive power capacity, i.e. the amount of reactive power exchanged by synchronous condenser, is not enough to achieve the total reactive power to be exchanged with the grid (the 100% of it), the remaining percentage of the total reactive power may be exchanged by the plurality of wind turbines.

In an example, the percentage of SC-reactive power may be about 75% - 100% and the percentage of WT-reactive power may thus be about 0% - 25%. In another example, the percentage of SC-reactive power may be about 50% - 80% and the percentage of WT-reactive power may thus be about 20% - 50%.

As a result, the plurality of wind turbines may not need to be dimensioned to exchange high amounts of reactive power because the exchanged amount may be shared between the synchronous condenser. The manufacturing costs of the plurality of wind turbines may be reduced as some elements of the wind turbines such as cables, the inverter and/or the converter may not need to be oversized or at least the oversize of the elements may be less than in wind farms lacking a synchronous condenser.

The less reactive power exchange the plurality of wind turbines are configured to exchange, the lower manufacturing cost is, i.e. the oversizing of some wind turbines parts or elements e.g. the converter, the cables, etc., may be reduced.

Figure 6A discloses an example wherein all the reactive power is to be exchanged by the synchronous condenser 50, that is the percentage of SC-reactive power is 100% of the total required reactive power 84. And thus, the percentage of aggregate WT-reactive power is zero, i.e. no reactive power may be exchanged by the plurality of the wind turbines.

Figure 6B discloses three examples wherein the total required reactive power 84B to be exchanged may comprise a percentage of SC-reactive power 54A - 54C which may be about 75% - 97%, and a percentage of aggregate WT-reactive power 44A - 44C which may be about 3% - 25%.

In a first example, the percentage of the SC-reactive power 54A may be about 75% of the total required reactive power 84. Therefore, the percentage of WT-reactive power 44A may be about 25% of the total required reactive power.

In a second example, the percentage of SC-reactive power 54B may be about 90% of the total required reactive power 84. Therefore, the percentage of WT-reactive power 44B may be about 10% of the total required reactive power.

In a third example, the percentage of SC-reactive power 54C may be about 97% of the total required reactive power 84. Therefore, the percentage of WT-reactive power 44C may be about 3% of the total required reactive power.

Figure 6C discloses three examples wherein the total required reactive power 84B to be exchanged may comprise a percentage of SC-reactive power 54D - 54F which may be about 50% - 75%, and a percentage of aggregate WT-reactive power 44D - 44F which may be about 25% - 50%.

In a first example, the percentage of SC-reactive power 54D may be about 50% of the total required reactive power 84. Therefore, the percentage of WT-reactive power 44D may be about 50% of the total required reactive power.

In a second example, the percentage of SC-reactive power 54E may be about 65%. Therefore, the percentage of WT-reactive power 44E may be about 35% of the total required reactive power.

In a third example, the percentage of SC-reactive power 54F may be about 75% of the total required reactive power 84. Therefore, the percentage of WT-reactive power 44F may be about 25% of the total required reactive power.

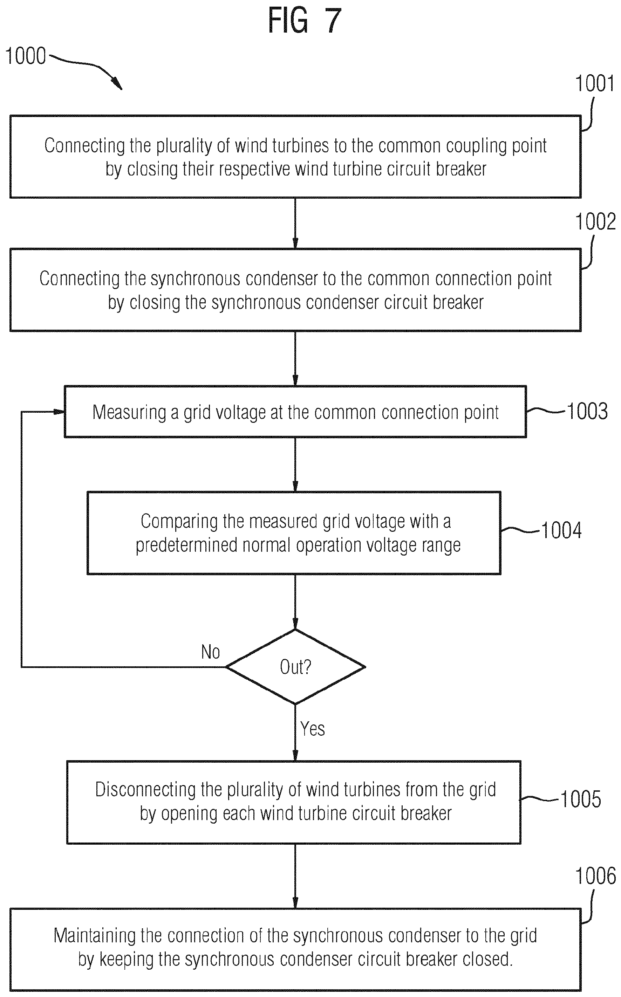

Figure 7 shows a method 1000 for operating a wind farm according to any of the disclosed examples during a grid fault.

Firstly, the plurality of wind turbines may, in block 1001, be connected to the common connection point by closing their respective wind turbine circuit breakers. The power generated by the plurality of wind turbines, i.e. the aggregated power, may therefore be injected to the grid. The synchronous condenser may, in block 1002, be connected to the common connection point by closing the synchronous condenser circuit breaker.

The operation of the wind farm, i.e. operation of the plurality of wind turbines, may then be initialized or started up. The wind turbines may be started up. Besides, and before connecting the synchronous condenser to the grid, it may be synchronized to the grid. To that end, the synchronizing device may speed up the synchronous condenser up to a synchronous speed. Then, the measuring device may measure grid and synchronous condenser phases, upon detecting that the synchronous condenser and grid are in phase, the synchronous condenser circuit breaker may be closed e.g. by the local controller.

While operating the wind farm, the grid voltage may, in block 1003, be measured at the common connection point. The measurement may be done by a central controller of the wind turbine, by a sensor arranged at common connection point or by the local control of the synchronous condenser. The measured grid voltage may, in block 1004, be compared with a predetermined normal operation voltage range.

The predetermined normal operation voltage range may e.g. a voltage around $\pm$ 5% of the nominal grid voltage value. In some examples, the nominal grid voltage may be 10% - 15%.

Such comparison may be carried out by the central controller of the wind farm which may compare the measured grid voltage with a look-up table or values stored in a memory device.

In the event the measured grid voltage is within the normal operation voltage range the wind turbines may continue operating without any operational adjustment or change. On the contrary, if the measured grid voltage is out of the predetermined normal operation voltage range, i.e. a grid fault happened, the plurality of wind turbines may, in block 1005, be disconnected from the common connection point by opening the respective wind turbine circuit breaker each wind turbine. The wind turbine circuit breakers may be opened upon receiving instructions e.g. a signal, from the central controller of the wind farm.

By disconnecting the plurality of wind turbines from the grid, the wind turbines may continue operating without any sudden and/or drastic operation change which may cause loads and stress in the mechanical parts. Thus, failures may be avoided while preventing shortening the life term of the wind turbines.

In an example, the plurality of wind turbines may be disconnected from the common connection point simultaneously.

In an alternative example, the plurality of wind turbines may be disconnected from the common connection point iteratively by iteratively opening the respective wind turbine circuit breaker of each of the plurality of wind turbines. The disconnection of a subsequent wind turbine may be carried out e.g. about 10 - 50 milliseconds after disconnecting the preceding wind turbine. Such disconnection may be based on instructions from a central controller and/or as a function of the voltage at the common connection point.

Besides, the connection of the synchronous condenser to the grid may, in block 1006, be maintained by keeping the synchronous condenser circuit breaker closed. The synchronous condenser may thus support the grid in overcoming the grid fault i.e. to recover the nominal grid voltage.

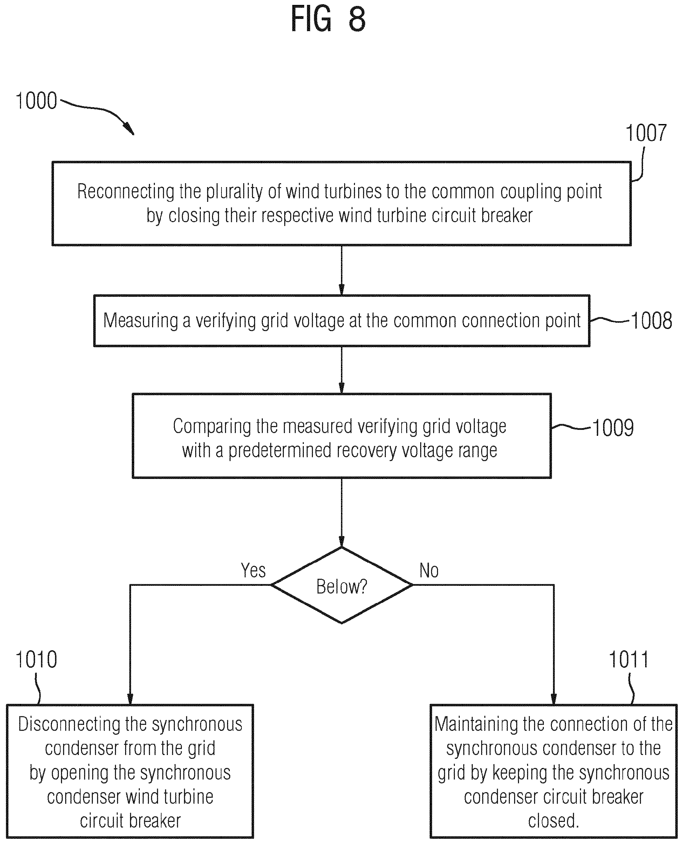

Figure 8 depicts a continuation of method 1000 Figure 7 according to an example.

At a predetermined reconnection time t_rec, i.e. about 0.1 - 5 seconds after the disconnection of the plurality of the wind turbines, the plurality of wind turbines may, in block 1007, be reconnected to the common connection point by closing the respective wind turbine circuit breaker.

In an example, the plurality of wind turbines may be simultaneously reconnected at the predetermined reconnection time t_rec.

In another example, the plurality of wind turbines may be iteratively reconnected to the common connection point. An iterative reconnection may prevent or at least substantially avoided mechanical stress in the wind turbines and also prevent introducing disturbance on the grid. Each wind turbine of the plurality of wind turbines may thus be connected at a particular reconnection times t_rec_WT-1, ..., t_rec_WT-N. The delay in reconnection time from a subsequent wind turbine to a preceding wind turbine to may be about 0.1 - 5 seconds. In such examples, the reconnection time of the first wind turbine t_rec_WT-1 may be equal to the reconnection time t_rec.

In an example, the plurality of wind turbines may be iteratively reconnected in a predetermined reconnection sequence or order. Such sequence may be based or may depend on operational parameters of the plurality of wind turbines. The operational parameters may be the voltage at the terminals of each wind turbine, the rotational speed of the rotor or any other suitable operational parameter.

The operational parameters may be locally measured e.g. by sensors, at each of the plurality of wind turbines and transmitted to the central controller in order to determine the reconnection sequence or order.

In an example, the reconnection order may be based on the decreasing value of the operational parameter, that is, the wind turbine having highest e.g. terminal voltage or rotor speed may be firstly reconnected and the latest wind turbine to be reconnected may be the wind turbine having lowest voltage or rotor speed.

At a predetermined recovery time t_recovery, the grid voltage may, in block 1008, be measured at the common connection point in order to measure a verifying voltage V_ver. The verifying voltage V_ver may be a voltage measurement that determines or confirms that the grid fault has been overcame and/or that the grid is successfully recovering from the grid fault, i.e. that the grid is close to get back or to reacquire its nominal voltage.

In an example, the predetermined recovery time t_recovery may be any time after reconnecting the plurality of wind turbines to the common connection point. The predetermined recovery time t_recovery may be set about 3 - 5 seconds after the grid fault.

The measured verifying voltage may, in block 1009, be compared with a predetermined recovery voltage or voltage range V_recovery. The recovery voltage may be indicative of a grid recovery, i.e. that the grid has overcame the grid fault and is close to recover the nominal grid voltage. In an example, the recovery voltage may be about 80% - 100% of the nominal grid voltage. In an example, the recovery voltage may be about 85% - 90% of the nominal grid voltage.

If the measured verifying voltage of the grid is below the predetermined recovery voltage range of the grid V_recovery, i.e. the grid has not recovered from the grid fault, the synchronous condenser may, in block 1010, be disconnected from the grid by opening the synchronous condenser circuit breaker. The synchronous condenser circuit breaker may be opened e.g. after receiving instructions from the central controller.

In an example, in the event the measured verifying voltage of the grid is below the predetermined recovery voltage range of the grid V_recovery but beyond a minimum required grid voltage value, e.g. 10% - 25 % of the nominal value, the synchronous condenser may be maintained connected, in order to support the grid in recovering the nominal value.

In an example, the plurality of wind turbines may be re-disconnected from the common connection point if the measured verifying voltage of the grid is below the predetermined recovery voltage range of the grid V_recovery. That is, both the synchronous condenser and the plurality of wind turbines may be disconnected from the common connection point, and thus from the grid, if the grid does not successfully overcome a grid fault. Short-circuits or any other undesired electrics events (which may damage the elements of the wind farm) may be avoided.

On the contrary, in the event the measured verifying voltage of the grid is not below i.e. it is within or above the predetermined recovery voltage range of the grid V_recovery, the synchronous condenser may, in block 1011, be maintained connected to the common connection point, i.e. an thus to the grid, by keeping closed the synchronous condenser circuit breaker. As it may be considered that either the grid has recovered the nominal grid voltage or the grid is close to recover the nominal grid voltage, there may not be any need to disconnect the synchronous condenser. The plurality of wind turbines and the synchronous condenser may be already connected to the grid, and thus wind farm may thus continue with its normal operation.

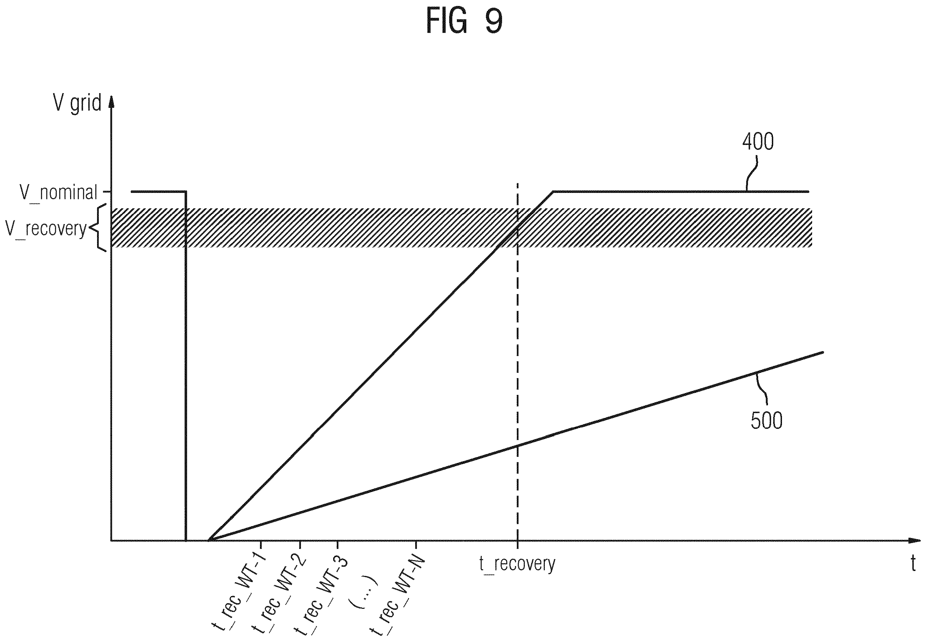

Figure 9 discloses the variation of the grid voltage with respect to time in case of a grid fault in a very schematic manner. As shown in the figure, the grid voltage is at the nominal value until a grid fault occurs. Consequently, the grid voltage decreases from the nominal value to zero or close to zero.

The graph of Figure 9 also shows two different schematic examples of a grid recovery: a first line 400 corresponds to a successful grid recovery and, a second line 500 which illustrates an unsuccessful grid recovery. After a grid fault the grid may gradually recover the nominal value, and depending on the grid conditions such recovery may be faster or slower.

In order to be considered as a successful grid recovery, the grid voltage at a predetermined recovery time t_recovery, e.g. 3 - 5 seconds after the grid fault, may be within or above a predetermined recovery voltage e.g. 85%-90% of nominal grid voltage.

As shown in line 400, the grid voltage at recovery time t_recovery (see the dotted line) is within the recovery range (herein indicated with shadow diagonal stripes), therefore a successful grid recovery may be determined. Thus, the synchronous condenser may be maintained connected to the common connection point.

On the contrary, at recovery time t_recovery, the grid voltage of line 500 is not within the recovery range, thereby the grid recovery may be determined to be unsuccessful. Consequently, the synchronous condenser may be disconnected from the common connection point.

In an example, the predetermined recovery voltage may be a value, i.e. not a range, e.g. 85% of the nominal value. In such examples, in the event the grid voltage is equal to or higher than the recovery voltage, a successful grid recover may be determined. Otherwise, if the grid voltage is below the recovery voltage, the grid recovery may be determined as unsuccessful.

Figure 9 additionally depicts the reconnection time of each of the plurality of wind turbines t_rec_WT-1, ..., t_rec_WT-N in an example wherein the plurality of wind turbines are reconnected in an iterative manner. As shown in Figure 7, all wind turbines of the plurality of wind turbines may be reconnected to common connection point, i.e. and thus, to the grid; before the recovery time. That is, before determining if the grid has successfully overcame the grid fault.

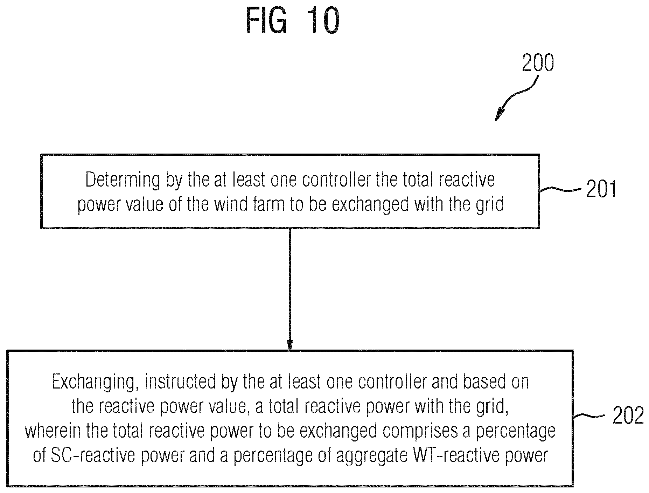

Figure 10 illustrates a flow chart of a method 2000 for operating a wind turbine farm according to any of the disclosed examples.

Firstly, a controller of the wind farm, e.g. the central controller; may, in block 201, determine the total reactive power value of the wind farm to be exchanged with the grid.

In an example, a parameter may be measured at a common connection point. The measured parameter may be either a grid parameter e.g. grid voltage, or a wind farm parameter e.g. the power factor.

The measured parameter may be compared e.g. by the central controller, with a reference parameter value. The reference parameter value may be a reference given by the grid operator or may be a value stored at a memory storage device of the central controller. In the event the measured parameter and the reference value are equal, no further adjustments may be needed i.e. the wind farm may continue operating unaltered. Otherwise, i.e. if the measured parameter is different from the reference value, the amount and the flow direction, i.e. import or export, of the total reactive power value may be determined in order to adjust the reactive power exchange of the wind turbine farm.

Determining the total reactive power value may also comprise determining e.g. at the central controller, the percentage of total reactive power to be shared by the synchronous condenser and by the plurality of wind turbines.

The wind farm may, in block, 202, exchange a total reactive power with the grid e.g. after being instructed by a controller e.g. a central controller of the wind farm. The total reactive power may be based on the determined reactive power value and may comprise a percentage of SC-reactive power and a percentage of aggregate WT-reactive power.

Exchanging a total reactive power may comprise exporting or importing reactive power. In an example, the total reactive power may be exported to the grid e.g. in cases wherein the grid voltage is below a reference value. In other examples, the total reactive power may be imported from the grid e.g. in the event the voltage of the grid needs to be lowered.

In some examples, the total reactive power exchanged may comprises a percentage of aggregate WT-reactive power equal to zero. That is, all the reactive power, i.e. the 100% of the total reactive power, exchanged by the wind farm may be exchanged by the synchronous condenser.

However, the synchronous condenser may have a predetermined reactive power capability, i.e. a maximum reactive power to be exchanged, which may in some examples not be enough to achieve the total reactive power. In examples wherein the total reactive power is higher than the maximum amount the synchronous condenser, the remaining percentage up to the total reactive power, may be exchanged by the plurality of the wind turbines.

That is, in some examples, the total reactive power exchanged may comprises a non-zero percentage of aggregate WT-reactive power. In an example, the percentage of aggregate WT-reactive power may be less than about 25% of the total required reactive power. In an example, the percentage of aggregate WT-reactive power may be about 25% - 50% of the total required reactive power.

While specific embodiments are disclosed herein, various changes and modifications can be made without departing from the scope of the invention. The present embodiments are to be considered in all respects as illustrative and non-restrictive, and all changes coming within the meaning of the appended claims are intended to be embraced therein.

**Claims**

1. A method for operating (1000) a wind turbine farm (30) during grid fault, the wind farm comprising

   a plurality of wind turbines (1), each of the plurality of wind turbines being connected to a common connection point (70) by a wind turbine circuit breaker, the circuit breakers being configured to connect/disconnect their respective wind turbine from the common connection point (70), and
   a synchronous condenser (50) connected to the common connection point (70) via a synchronous condenser circuit breaker, the synchronous condenser circuit breaker being configured to connect/disconnect the synchronous condenser from the grid
   wherein the common connection point (70) being coupled to the grid (80);

   the method comprising:

   connecting (1001) the plurality of wind turbines to the common coupling point (70) by closing their respective wind turbine circuit breaker;
   connecting (1002) the synchronous condenser (50) to the common connection point (70) by closing the synchronous condenser circuit breaker;
   measuring (1003) a grid voltage at the common connection point (70);
   comparing (1004) the measured grid voltage with a predetermined normal operation voltage range;
   **characterized in that** the method further comprises
   disconnecting (1005) the plurality of wind turbines (1) from the common connection point (70) by opening each wind turbine circuit breaker, thereby disconnecting the plurality of wind turbines (1) from the grid (80), upon determining that the measured grid voltage is out of the predetermined normal operation voltage range;
   upon determining that the measured grid voltage is out of the predetermined normal operation voltage range, maintaining (1006) the connection of the synchronous condenser (50) to the common connection point (70) by keeping the synchronous condenser circuit breaker closed, thereby maintaining the synchronous condenser (50) connected to the grid; and reconnecting (1007) the plurality of wind turbines (1) to the common connection point (70) by closing the respective wind turbine circuit breaker of each of the plurality of wind turbines (1), at a predefined reconnection time (t_rec).

2. The method (1000) according to claim 1, further comprising:

measuring a verifying voltage of the grid (V_ver) at the common connection point (70) at a predetermined recovery time (t_recovery), and comparing the measured verifying voltage (V_ver) with a predetermined recovery voltage range (V_recovery).

3. The method (1000) according to claim 2, further comprising:
disconnecting the synchronous condenser (50) from the grid by opening the synchronous condenser circuit breaker, if the measured verifying voltage of the grid (V_ver) is below the predetermined recovery voltage range of the grid (V_recovery).

4. The method (1000) according to claim 2, further comprising:
maintaining the synchronous condenser (50) connected to the grid by keeping closed the synchronous condenser circuit breaker, if the measured verifying voltage of the grid (V_ver) is within the predetermined recovery voltage range of the grid (V_recovery).

5. The method (1000) according to any of claims 1 - 4, wherein reconnecting (1007) the plurality of wind turbines (1) comprises iteratively reconnecting the plurality of wind turbines (1) to avoid a simultaneous reconnection of the plurality of turbines.

6. The method (1000) according to any of claims 1 - 5, wherein reconnecting (1007) the plurality of wind turbines (1) comprises iteratively reconnecting the plurality of wind turbines (1) in a predetermined reconnection sequence or order.

7. The method (1000) according to claim 6, wherein the reconnection sequence or order depends on the wind turbine terminal voltage (22) or on the rotational speed (25) of the rotor of each wind turbine of the plurality of wind turbines (1).

8. The method (1000) according to any of claims 1 - 7, wherein disconnecting (1005) the plurality of wind turbines (1) from the common connection point (70) comprises iteratively disconnecting the plurality of wind turbines (1) by iteratively opening the respective wind turbine circuit breaker of each of the plurality of wind turbines.

9. The method (1000) according to any of claims 1 - 8, further comprising:

determining by the at least one controller the total reactive power value of the wind farm to be exchanged with the grid;
exchanging with the grid, instructed by the at least one controller and based on the reactive power value, a total reactive power; wherein the total reactive power comprises a percentage of SC-reactive power and a percentage of aggregate WT-reactive power.

10. A wind turbine farm (30) for operating during grid faults, the wind farm (30) comprising:

a plurality of wind turbines (1) connected to a common connection point (70), the common connection point (70) being coupled to the grid (80);
a plurality of wind turbine circuit breakers (42-1, ..., 42-N) configured to selectively connect/disconnect the plurality of wind turbines (1) from the common connection point (70), wherein each circuit breaker (42-1, ..., 42-N) comprises an end coupled to a wind turbine of the plurality of wind turbines (1) and the other end connected to the common connection point (70);
a synchronous condenser (50) connected to the common connection point (70), the synchronous condenser (50) being configured to provide an amount of apparent power to the grid (80);
a synchronous condenser circuit breaker (43) configured to selectively connect/disconnect the synchronous condenser (50) from the common connection point (70), wherein the synchronous condenser circuit breaker (43) comprises an end coupled to the synchronous condenser (50) and the other end connected to the common connection point (70); and
a central controller configured to implement the method according to any of claims 1 to 9.

11. The wind turbine farm (30) according to claim 10, wherein the synchronous condenser (50) is configured to provide an apparent power rating of less than half of the aggregate power rating of the plurality of wind turbines (1).

12. The wind turbine farm (30) according to claim 10 or 11, wherein the synchronous condenser (70) is configured to provide an apparent power rating of less than one-quarter of the aggregate power rating of the plurality of wind turbines (1).

**13.** The wind turbine farm (1) according to any of claims 10 - 12, wherein the synchronous condenser (50) comprises a flywheel.

**14.** A computer program product comprising instructions to cause the wind turbine farm according to any of claims 10 - 13 to execute the method according to any of claims 1 - 9.

**Patentansprüche**

**1.** Verfahren zum Betreiben (1000) eines Windturbinenparks (30) während eines Netzfehlers, wobei der Windpark Folgendes umfasst:

mehrere Windturbinen (1), wobei jede der mehreren Windturbinen durch einen Windturbinen-Leistungsschalter mit einem gemeinsamen Verbindungspunkt (70) verbunden ist, wobei die Leistungsschalter dazu ausgelegt sind, ihre jeweilige Windturbine mit dem gemeinsamen Verbindungspunkt (70) zu verbinden/davon zu trennen, und
einen Phasenschieber (50), der über einen Phasenschieber-Leistungsschalter mit dem gemeinsamen Verbindungspunkt (70) verbunden ist, wobei der Phasenschieber-Leistungsschalter dazu ausgelegt ist, den Phasenschieber mit dem Netz zu verbinden/davon zu trennen
wobei der gemeinsame Verbindungspunkt (70) mit dem Netz (80) gekoppelt ist;
wobei das Verfahren umfasst:

Verbinden (1001) der mehreren Windturbinen mit dem gemeinsamen Kopplungspunkt (70) durch Schließen ihres jeweiligen Windturbinen-Leistungsschalters;
Verbinden (1002) des Phasenschiebers (50) mit dem gemeinsamen Verbindungspunkt (70) durch Schließen des Phasenschieber-Leistungsschalters;
Messen (1003) einer Netzspannung am gemeinsamen Verbindungspunkt (70);
Vergleichen (1004) der gemessenen Netzspannung mit einem vorbestimmten normalen Betriebsspannungsbereich;
**dadurch gekennzeichnet, dass** das Verfahren ferner Folgendes umfasst:

Trennen (1005) der mehreren Windturbinen (1) von dem gemeinsamen Verbindungspunkt (70) durch Öffnen jedes Windturbinen-Leistungsschalters, wodurch die mehreren Windturbinen (1) von dem Netz (80) getrennt werden, bei Bestimmen, dass die gemessene Netzspannung außerhalb des vorbestimmten normalen Betriebsspannungsbereichs liegt;
bei Bestimmen, dass die gemessene Netzspannung außerhalb des vorbestimmten normalen Betriebsspannungsbereichs liegt, Beibehalten (1006) der Verbindung des Phasenschiebers (50) mit dem gemeinsamen Verbindungspunkt (70), indem der Phasenschieber-Leistungsschalter geschlossen gehalten wird, wodurch der Phasenschieber (50) mit dem Netz verbunden gehalten wird; und
erneutes Verbinden (1007) der mehreren Windturbinen (1) mit dem gemeinsamen Verbindungspunkt (70) durch Schließen des jeweiligen Windturbinen-Leistungsschalters jeder der mehreren Windturbinen (1) zu einer vordefinierten Wiederverbindungszeit (t_rec).

**2.** Verfahren (1000) nach Anspruch 1, ferner umfassend:

Messen einer Verifizierungsspannung des Netzes (V_ver) an dem gemeinsamen Verbindungspunkt (70) zu einer vorbestimmten Wiederherstellungszeit (t_recovery), und
Vergleichen der gemessenen Verifizierungsspannung (V_ver) mit einem vorbestimmten Wiederherstellungsspannungsbereich (V_recovery).

**3.** Verfahren (1000) nach Anspruch 2, ferner umfassend:
Trennen des Phasenschiebers (50) vom Netz durch Öffnen des Phasenschieber-Leistungsschalters, wenn die gemessene Verifizierungsspannung des Netzes (V_ver) unter dem vorbestimmten Wiederherstellungsspannungsbereich des Netzes (V_recovery) liegt.

**4.** Verfahren (1000) nach Anspruch 2, ferner umfassend:
Verbundenhalten des Phasenschiebers (50) mit dem Netz, indem der Phasenschieber-Leistungsschalter geschlossen gehalten wird, falls die gemessene Verifizierungsspannung des Netzes (V_ver) innerhalb des vorbestimmten Wiederherstellungsspannungsbereichs des Netzes (V_recovery) liegt.

**5.** Verfahren (1000) nach einem der Ansprüche 1 - 4, wobei das Wiederverbinden (1007) der mehreren Windturbinen (1) iteratives Wiederverbinden der mehreren Windturbinen (1) umfasst, um ein gleichzeitiges Wiederverbinden der mehreren Windturbinen zu vermeiden.

6. Verfahren (1000) nach einem der Ansprüche 1 - 5, wobei das Wiederverbinden (1007) der mehreren Windturbinen (1) iteratives Wiederverbinden der mehreren Windturbinen (1) in einer vorbestimmten Wiederverbindungssequenz oder -reihenfolge umfasst.

7. Verfahren (1000) nach Anspruch 6, wobei die Wiederverbindungssequenz oder -reihenfolge von der Windturbinenanschlussspannung (22) oder von der Drehzahl (25) des Rotors jeder Windturbine der mehreren Windturbinen (1) abhängt.

8. Verfahren (1000) nach einem der Ansprüche 1 - 7, wobei das Trennen (1005) der mehreren Windturbinen (1) von dem gemeinsamen Verbindungspunkt (70) das iterative Trennen der mehreren Windturbinen (1) durch iteratives Öffnen des jeweiligen Windturbinen-Leistungsschalters jeder der mehreren Windturbinen umfasst.

9. Verfahren (1000) nach einem der Ansprüche 1-8, ferner umfassend:

Bestimmen des mit dem Netz auszutauschenden Gesamtblindleistungswerts des Windparks durch die mindestens eine Steuerung; Austauschen mit dem Netz, angewiesen durch die mindestens eine Steuerung und basierend auf dem Blindleistungswert, einer Gesamtblindleistung; wobei die gesamte Blindleistung einen Prozentsatz an SC-Blindleistung und einen Prozentsatz an aggregierter WT-Blindleistung umfasst.

10. Windturbinenpark (30) zum Betrieb während Netzfehlern, wobei der Windturbinenpark (30) Folgendes umfasst:

mehrere Windturbinen (1), die mit einem gemeinsamen Verbindungspunkt (70) verbunden sind, wobei der gemeinsame Verbindungspunkt (70) mit dem Netz (80) gekoppelt ist; mehrere Windturbinen-Leistungsschalter (42-1, ..., 42-N), die dazu ausgelegt sind, die mehreren Windturbinen (1) selektiv mit dem gemeinsamen Verbindungspunkt (70) zu verbinden/davon zu trennen, wobei jeder Leistungsschalter (42-1, ..., 42-N) ein Ende umfasst, das mit einer Windturbine der mehreren Windturbinen (1) gekoppelt ist, und wobei das andere Ende mit dem gemeinsamen Verbindungspunkt (70) verbunden ist;

einen Phasenschieber (50), der mit dem gemeinsamen Verbindungspunkt (70) verbunden ist, wobei der Phasenschieber (50) dazu ausgelegt ist, dem Netz (80) einen Betrag an Scheinleistung bereitzustellen; einen Phasenschieber-Leistungsschalter (43), der dazu ausgelegt ist, den Phasenschieber (50) gezielt mit dem gemeinsamen Verbindungspunkt (70) zu verbinden/davon zu trennen, wobei der Phasenschieber-Leistungsschalter (43) ein Ende umfasst, das mit dem Phasenschieber (50) gekoppelt ist, und wobei das andere Ende mit dem gemeinsamen Verbindungspunkt (70) verbunden ist; und eine zentrale Steuerung, ausgelegt zum Implementieren des Verfahrens nach einem der Ansprüche 1 bis 9.

11. Windturbinenpark (30) nach Anspruch 10, wobei der Phasenschieber (50) dazu ausgelegt ist, eine Nennscheinleistung von weniger als der Hälfte der aggregierten Nennleistung der mehreren Windturbinen (1) bereitzustellen.

12. Windturbinenpark (30) nach Anspruch 10 oder 11, wobei der Phasenschieber (70) dazu ausgelegt ist, eine Nennscheinleistung von weniger als einem Viertel der aggregierten Nennleistung der mehreren Windturbinen (1) bereitzustellen.

13. Windturbinenpark (1) nach einem der Ansprüche 10 - 12, wobei der Phasenschieber (50) ein Schwungrad umfasst.

14. Computerprogrammprodukt, das Anweisungen umfasst, die den Windturbinenpark nach einem der Ansprüche 10 - 13 veranlassen, das Verfahren nach einem der Ansprüche 1 - 9 auszuführen.

## Revendications

1. Procédé (1000) de fonctionnement d'un parc éolien (30) durant une défaillance du réseau, le parc éolien comprenant une pluralité d'éoliennes (1), chacune de la pluralité d'éoliennes étant connectée à un point de raccordement commun (70) par un interrupteur d'éolienne, les interrupteurs étant configurés pour connecter/déconnecter leur éolienne respective du point de raccordement commun (70), et

un condensateur synchrone (50) connecté au point de raccordement commun (70) par l'intermédiaire d'un interrupteur de condensateur synchrone, l'interrupteur de condensateur synchrone étant configuré pour connecter/déconnecter le condensateur synchrone du réseau dans lequel le point de raccordement commun (70) est accouplé au réseau (80) ;
le procédé comprenant les étapes consistant à :

raccorder (1001) la pluralité d'éoliennes au point de couplage commun (70) en fermant leur interrupteur respectif d'éolienne ;
raccorder (1002) le condensateur synchrone (50) au point de raccordement commun (70) en fermant l'interrupteur de condensateur synchrone ;
mesurer (1003) une tension du réseau au niveau du point de raccordement commun (70) ;
comparer (1004) la tension mesurée du réseau à une plage de tension de fonctionnement normale prédéterminée ;

**caractérisé en ce que** le procédé comprend en outre les étapes consistant à

déconnecter (1005) la pluralité d'éoliennes (1) du point de raccordement commun (70) en ouvrant chaque interrupteur d'éolienne, déconnectant ainsi la pluralité d'éoliennes (1) du réseau (80), lors de la détermination que la tension mesurée du réseau se situe hors de la plage de tension de fonctionnement normale prédéterminée ;
lors de la détermination que la tension mesurée du réseau se situe hors de la plage de tension de fonctionnement normale prédéterminée, maintenir (1006) le raccordement du condensateur synchrone (50) au point de raccordement commun (70) en maintenant fermé l'interrupteur de condensateur synchrone, maintenant ainsi le condensateur synchrone (50) connecté au réseau ; et reconnecter (1007) la pluralité d'éoliennes (1) au point de raccordement commun (70) en fermant l'interrupteur respectif d'éolienne de chacune de la pluralité d'éoliennes (1), à un temps de reconnexion prédéfini (t_rec).

2. Procédé (1000) selon la revendication 1, comprenant en outre les étapes consistant à :

mesurer une tension de vérification (V_ver) du réseau au point de raccordement commun (70) à un moment de récupération prédéterminé (t_recovery), et
comparer la tension de vérification (V_ver) mesurée à une plage de tension de récupération prédéterminée (V_recovery).

3. Procédé (1000) selon la revendication 2, comprenant en outre les étapes consistant à :
déconnecter le condensateur synchrone (50) du réseau en ouvrant l'interrupteur de condensateur synchrone, si la tension de vérification (V_ver) mesurée du réseau se situe en-dessous de la plage de tension de récupération prédéterminée (V_recovery) du réseau.

4. Procédé (1000) selon la revendication 2, comprenant en outre les étapes consistant à :
maintenir le condensateur synchrone (50) connecté au réseau en maintenant fermé l'interrupteur de condensateur synchrone, si la tension de vérification (V_ver) mesurée du réseau se situe à l'intérieur de la plage de tension de récupération prédéterminée (V_recovery) du réseau.

5. Procédé (1000) selon l'une quelconque des revendications 1 à 4,
dans lequel la reconnexion (1007) de la pluralité d'éoliennes (1) comprend la reconnexion de manière itérative de la pluralité d'éoliennes (1) pour éviter une reconnexion simultanée de la pluralité d'éoliennes.

6. Procédé (1000) selon l'une quelconque des revendications 1 à 5, dans lequel la reconnexion (1007) de la pluralité d'éoliennes (1) comprend la reconnexion de manière itérative de la pluralité d'éoliennes (1) dans une séquence ou un ordre de reconnexion prédéterminé(e).

7. Procédé (1000) selon la revendication 6, dans lequel la séquence ou l'ordre de reconnexion dépend de la tension de la borne d'éolienne (22) ou de la vitesse de rotation (25) du rotor de chaque éolienne de la pluralité d'éoliennes (1).

8. Procédé (1000) selon l'une quelconque des revendications 1 à 7, dans lequel la déconnexion (1005) de la pluralité d'éoliennes (1) du point de raccordement commun (70) comprend la déconnexion de manière itérative de la pluralité d'éoliennes (1) en ouvrant de manière itérative l'interrupteur respectif d'éolienne de chacune de la pluralité d'éoliennes.

9. Procédé (1000) selon l'une quelconque des revendications 1 à 8, comprenant en outre les étapes consistant à :

déterminer par le au moins un contrôleur la valeur de puissance de réaction totale du parc éolien à échanger avec le réseau ;
échanger avec le réseau, instruit par le au moins un contrôleur et sur la base de la valeur de puissance de réaction, une puissance de réaction totale ; dans lequel
la puissance de réaction totale comprend un pourcentage de puissance de réaction-SC et un pourcentage de puissance de réaction-WT agrégée.

**10.** Parc éolien (30) pour un fonctionnement durant des défaillances du réseau, le parc éolien (30) comprenant :

une pluralité d'éoliennes (1) connectées à un point de raccordement commun (70), le point de raccordement commun (70) étant couplé au réseau (80) ;

une pluralité d'interrupteurs d'éolienne (42-1, **...,** 42-N) configurés pour connecter/déconnecter sélectivement la pluralité d'éoliennes (1) du point de raccordement commun (70), dans lequel chaque interrupteur (42-1, ..., 42-N) comprend une extrémité couplée à une éolienne de la pluralité d'éoliennes (1) et l'autre extrémité connectée au point de raccordement commun (70) ;

un condensateur synchrone (50) connecté au point de raccordement commun (70), le condensateur synchrone (50) étant configuré pour fournir une quantité de puissance apparente au réseau (80) ;

un interrupteur de condensateur synchrone (43) configuré pour connecter/déconnecter sélectivement le condensateur synchrone (50) du point de raccordement commun (70), dans lequel l'interrupteur de condensateur synchrone (43) comprend une extrémité couplée au condensateur synchrone (50) et l'autre extrémité connectée au point de raccordement commun (70) ; et

un contrôleur central configuré pour mettre en œuvre le procédé selon l'une quelconque des revendications 1 à 9.

**11.** Parc éolien (30) selon la revendication 10, dans lequel le condensateur synchrone (50) est configuré pour fournir une puissance nominale apparente de moins de la moitié de la puissance nominale agrégée de la pluralité d'éoliennes (1).

**12.** Parc éolien (30) selon la revendication 10 ou 11, dans lequel le condensateur synchrone (70) est configuré pour fournir une puissance nominale apparente de moins d'un quart de la puissance nominale agrégée de la pluralité d'éoliennes (1).

**13.** Parc éolien (30) selon l'une quelconque des revendications 10 à 12, dans lequel le condensateur synchrone (50) comprend un volant d'inertie.

**14.** Produit de programme informatique comprenant des instructions conduisant un parc éolien selon l'une quelconque des revendications 10-13 à exécuter le procédé selon l'une quelconque des revendications 1 à 9.

# FIG 1

## FIG 2

# FIG 3A

# FIG 3B

# FIG 4A

930A    100A    110A    900

90A

930A

92B, 96A

# FIG 4B

930B    100B    110B    920

90B    96B    94B

930B    92B

# FIG 4C

930C    100C    110C    910

90C    92C    94C

930C    96C

FIG 5

EP 4 292 185 B1

FIG 6A

Reactive power

100% ⌐————84

54

FIG 6B

Reactive power

100% ⌐————84

54A

25%
10% ┄ 44A
3%

Reactive power

100% ⌐————84

54B

25%
10%
3% ┄ 44B

Reactive power

100% ⌐————84

54C

25%
10%
3% ┄ 44C

FIG 6C

Reactive power

100% ⌐————84

54D

50%
35%
25% ┄ 44D

Reactive power

100% ⌐————84

54E

50%
35%
25% ┄ 44E

Reactive power

100% ⌐————84

54F

50%
35%
25% ┄ 44F

# FIG 7

1000

1001

Connecting the plurality of wind turbines to the common coupling point by closing their respective wind turbine circuit breaker

1002

Connecting the synchronous condenser to the common connection point by closing the synchronous condenser circuit breaker

Measuring a grid voltage at the common connection point — 1003

Comparing the measured grid voltage with a predetermined normal operation voltage range — 1004

No ⟨ Out? ⟩

Yes

Disconnecting the plurality of wind turbines from the grid by opening each wind turbine circuit breaker — 1005

1006

Maintaining the connection of the synchronous condenser to the grid by keeping the synchronous condenser circuit breaker closed.

# FIG 8

1000

1007

Reconnecting the plurality of wind turbines to the common coupling point
by closing their respective wind turbine circuit breaker

Measuring a verifying grid voltage at the common connection point —1008

Comparing the measured verifying grid voltage
with a predetermined recovery voltage range —1009

Yes / Below? / No

1010

Disconnecting the synchronous
condenser from the grid
by opening the synchronous
condenser wind turbine
circuit breaker

1011

Maintaining the connection of the
synchronous condenser to the
grid by keeping the synchronous
condenser circuit breaker
closed.

# FIG 9

FIG 10

200

Determing by the at least one controller the total reactive
power value of the wind farm to be exchanged with the grid

201

Exchanging, instructed by the at least one controller and based on
the reactive power value, a total reactive power with the grid,
wherein the total reactive power to be exchanged comprises a percentage
of SC-reactive power and a percentage of aggregate WT-reactive power

202

**EP 4 292 185 B1**

## REFERENCES CITED IN THE DESCRIPTION

**Patent documents cited in the description**

- EP 3080888 A1